# EUROPEAN PATENT APPLICATION

(11) **EP 1 688 235 A1**
(43) Date of publication of application: **09.08.2006**
(21) Application number: 05113085.4
(22) Date of filing: 30.12.2005
(51) Int. Cl.: B29C 49/48, B29C 49/12, B29C 49/06

(54) **Process for blow-molding a container comprising a handle**

(30) Priority: 04.02.2005 EP 05075290
(71) Applicant: THE PROCTER & GAMBLE COMPANY, Cincinnati, Ohio 45202 (US)
(72) Inventor: Connolly, William John, Windlesham Surrey GU20 6AG (GB); Etesse, Patrick Jean-François, 1040 Etterbeek (BE)
(74) Representative: Mather, Peter Geoffrey

(57) **Abstract**

The present invention relates to a process for blow-molding a container, the container comprising a handle, whereby the process comprises the steps of:
(i) introducing a thermoplastic preform (2) into a mold cavity (6) and stretching the preform (2) with a stretch rod (3);
(ii) increasing the pressure within the preform (2) so that the preform (2) expands within the mold cavity (6);
(iii) displacing at least one moving mold section within the mold and which deforms the thermoplastic material;
wherein the displacement of the moving section is in a direction which is substantially parallel to the direction of movement of the stretch rod (3).

## Description

The present invention relates to a process of stretch blow molding preforms in a mold cavity. The present invention is concerned with a process for the manufacture of containers comprising handles, especially bottles in excess of about 2 litres capacity, for which handles are highly desirable.

EP-A-0 346 518, published on 20^{th} December 1989, discloses an injection stretch blow molding process for the production of bottles with integral handles. The process comprises the steps of stretching a preform within a mold cavity by axial stretching with a stretch pin; and transverse stretching with blown air; and pressing and holding an area of the stretched preform between a pair of opposed moveable projecting members which move in a direction which is perpendicular to the axial movement of the stretch pin.

However this process requires the further step of thermally fusing the peripheral edges of the opposing depression and removing the resin inside the peripheral edges in order to form the handle.

The problem remains to provide a process of stretch blow molding in a mold cavity to provide a container having an integral handle without the need to fuse the inner walls of the container, and without the need to subsequently remove the sealed portions to create the handle in the container, a process called de-flashing. A clear advantage of a process that does not require sealing and then de-flashing is that it does not require using a material which is readily fusable. Further, it does not affect the integrity of the preform, and hence allows to provide a container that is not prone to leakage or breakage. Further, such a container will not have any sharp edges in the handle area which it is difficult to avoid when two sealed surfaces are cut through.

Another problem which remains is to provide a simpler mold with only one moving segment compared to the two opposite moving segments described in the prior art.

### Summary of the Invention

The present invention relates to a process for blow-molding a container, the container comprising a handle, whereby the process comprises the steps of:
(i) introducing a preform into a mold cavity and stretching the preform with a stretch rod;
(ii) increasing the pressure within the preform so that the preform expands within the mold cavity;
(iii) displacing at least one further moving section within the mold to deform the thermoplastic material;
and wherein the displacement of the moving section is in a direction which is substantially parallel to the direction of movement of the stretch rod.

Steps (i) and (ii) may take place in any order, or simultaneously.

### Brief Description of the Drawings

Figure 1a shows a perspective view of a preform which is suitable for use in the present invention. Figure 1b shows a cut-away section of a mold with the stretched and expanded preform therein.
Figure 2a shows a perspective view of an alternative embodiment of the present invention.
   Figure 2b shows a side elevation of this alternative embodiment.
Figure 3a shows a side elevation of another alternative embodiment of the present invention. Figure 3b shows a perspective view of this alternative embodiment.
Figure 4a shows a perspective view of another alternative embodiment of the present invention. Figure 4b shows a side elevation of this alternative embodiment.
Figure 5a shows a perspective view of an alternative embodiment of the present invention.
   Figure 5b shows a cut-away section of the mold in the handle region of this alternative embodiment. Figure 5c illustrates the cut off of the tail.
Figure 6a shows a perspective view of an alternative embodiment, using cams, of the present invention. Figure 6b shows a side elevation of this alternative embodiment.
Figure 7a shows a perspective view of an alternative, asymmetric, preform which is suitable for use in the present invention. Figure 7b shows a cut-away section of a bottle formed therefrom.
Figure 8 illustrates another alternative of the present invention.

### Detailed Description of the Invention

Transparent containers, such as bottles, are highly desirable packages for consumer goods such as drinks, foodstuffs, laundry and household cleaning products, shampoo and other personal care products.

It is also desirable that relatively large packages, for example 2 liters and above, should be provided with a handle so that the consumer can conveniently lift the product and pour from the package even when the package is full.

Suitable containers for consumer goods are typically blown in a molding process.

A "mold" as described herein generally comprises two or more parts which can be closed to form a "mold cavity", and opened in order to allow a preform to be inserted into the mold and/or the blown product to be removed from the mold. Additional moving elements within the mold cavity are referred to herein as "moving mold sections".

In commercial operations multiple mold cavities may be combined in a continuous, highspeed machine.

By "preform" what is meant herein is a molded form which is produced prior to expansion to form the finished object. A preform is necessarily somewhat smaller than the finished object. A preform is made from a thermoplastic material and is generally produced by, for example injection molding, at an elevated temperature in excess of the melt temperature of the thermoplastic material.

By "stretch blow-molding" or "SBM" what is meant herein is a process in which the preform is first stretched longitudinally, generally by means of a stretch rod or plunger, followed by a blowing step at a temperature above the glass transition temperature, designed to result in retained orientation in the blow direction so that the resulting configuration is "biaxially oriented". Stretch blow molding is a highly desirable process to manufacture bottles, especially bottles for consumer goods. The SBM process stretches and orients the thermoplastic material and allows to make bottles with highly desirable mechanical properties, especially clarity, mechanical strength (top load) and high resistance to impacts such as impacts occurring if the filled or partly filled bottle is dropped on to a hard surface.

Transparent containers are made from various materials, notably thermoplastic materials, and most commonly with polyethylene terephthalate (PET). Other materials suitable for use in the present invention are polypropylene (PP), polyethylene (PE), polyvinyl chloride (PVC) and polylactic acid (PLA). Polypropylene is particularly preferred. Polypropylene is readily available in commercial grades. Materials having suitable combinations of melt strength, re-heat properties, clarity and processing window size are available from suppliers such as Borealis, BP, and Total, e.g. Total's PPR7225.

The present invention relates to a stretch blow-molding process which provides a transparent container with a handle without requiring any secondary welding or deflashing process. In the present invention a moving section within the mold deforms the preform in a direction substantially parallel, and preferably opposing, the direction of movement of the stretch rod. This creates a minor cavity that is linked to the major cavity at just one end. This cavity is then filled with material via blow gas, and forms a handle section.

According to the present invention the movable mold section is displaced within the mold in a direction which is substantially parallel to the direction of movement of the stretch rod. Compared to the process of using two opposite moving segments which move in a direction perpendicular to the direction of movement of the stretch rod, as described in the prior art, the process of the present invention has the advantage of simplifying the mold design and construction, and furthermore facilitates higher speeds of operating the process. The displacement of the moving mold section as described herein can be better understood with reference to a series of orthogonal axes, x, y, z, in which the x axis is defined herein as the direction of movement of the stretch rod. However, the moveable mold section, moving in three dimensions, may also be displaced in the y and z axes (i.e. in the y-z plane), as well as in the x axis as defined above. By "substantially parallel" in the context of the present invention it is preferred that the acute angle formed between the y-z plane and the direction of travel of the tip of the moving mold section whilst in contact with the preform or expanding container is at least 30°, more preferably the angle is at least 45°, still more preferably it is at least 60°, and most preferably it is at least 75°.

In one embodiment of the present invention, the movable mold section deforms the expanding or expanded preform.

In an alternative embodiment of this invention, the movable mold section contacts the side of the preform during or after the stretch rod axially stretches the preform but before blow gas further expands the preform. This causes material to be held at an area above the contact point which is then blown into the minor cavity to form the handle. This alternative process enables more material to be used for the handle formation giving greater strength and dimensional stability.

Since this process requires significant deformation of the preform in order to achieve the desired end result, use of asymmetric preforms, preferential heating techniques and specific mold coatings may be desired in order to ease the distribution of material within the mold to render the process more efficient and reliable.

Preferred embodiments of the invention is described in more detail herein below with reference to the drawings.

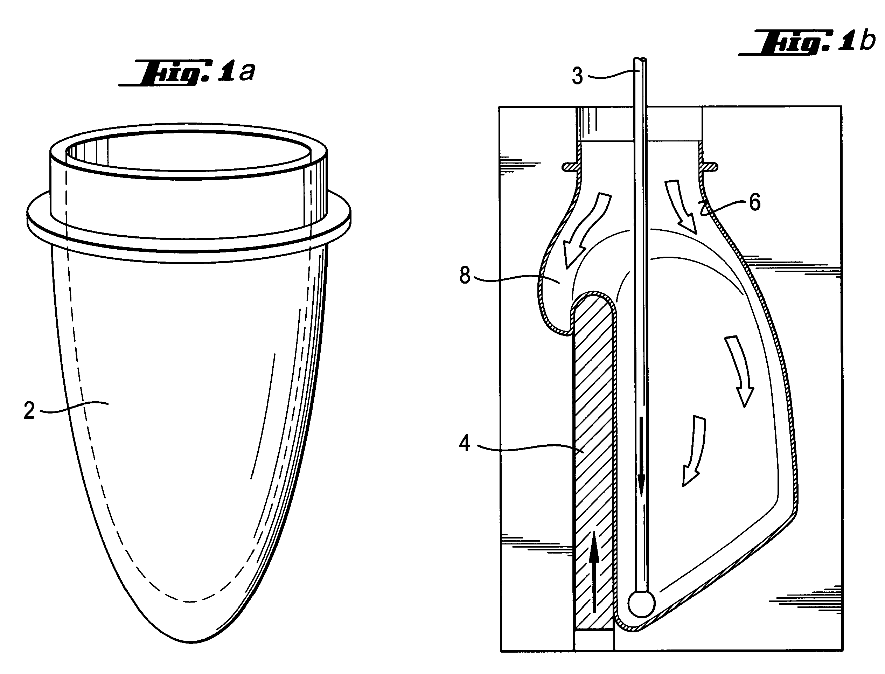

Figure 1a shows a standard shaped preform 2. The preform 2 may be fabricated by any known technique including injection molding, extrusion blow-molding or compression molding. This preform 2 is either re-heated to an appropriate molding temperature, or is already at this temperature after cooling from the injection-molding step of a 1-stage ISBM machine. In Figure 1b, the preform is introduced into a mold cavity 6 that contains a moveable mold section 4. A stretch rod 3 is then introduced into the hot preform 2 and used to longitudinally stretch the material. At or before the point when the rod 3 contacts the base of the preform 2, high pressure blow-gas is applied to the inside of the preform 2, forcing the preform 2 to expand into the vented mold cavity 6. The movable mold section 4 is initially retracted.

As the preform 2 expands and its walls thin, the movable mold section 4 moves within the mold 6, stretching material inwards towards the centre, and creating a cavity behind. Material will then be forced into this minor cavity 8, forming the handle. Further blow gas will then be applied to the inside of the preform at higher pressure than the initial gas, forcing the preform to completely fill the cavity 8.

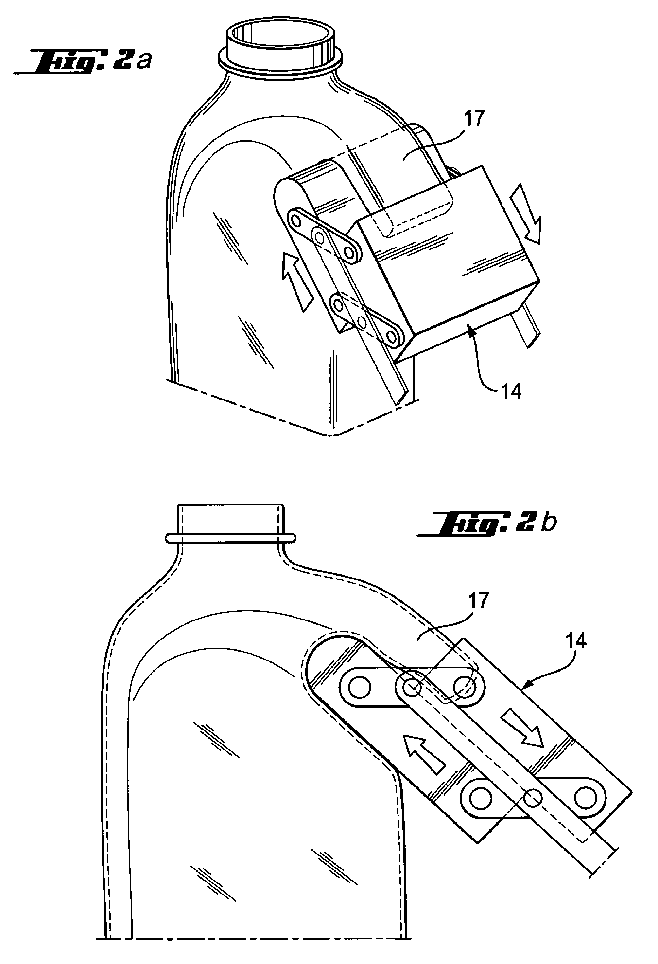

Figure 2 is a variation of Fig. 1b wherein the moving mold section 14 has been split into two half revolving segments which assist in formation of the minor cavity 17. This has the advantage that the stresses applied to the material can be reduced.

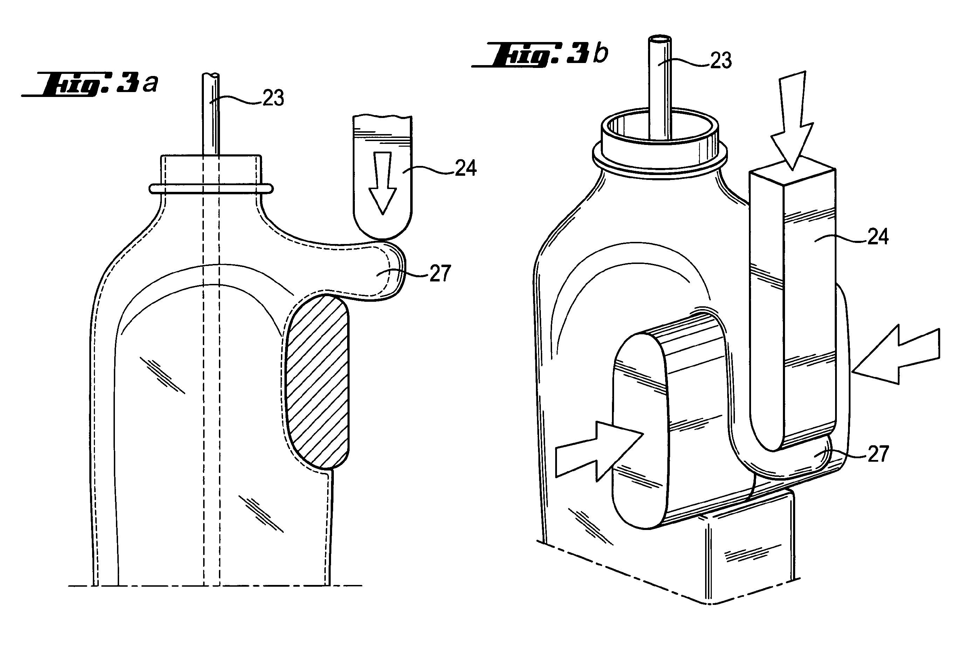

Figure 3 show another embodiment of the present invention in which a moving mold section 24 moving along the same axis as the stretch rod 23, and in the same direction as the stretch rod 23. This helps to better stretch the material in the minor cavity 27 as the material is both pushed and pulled at the same time.

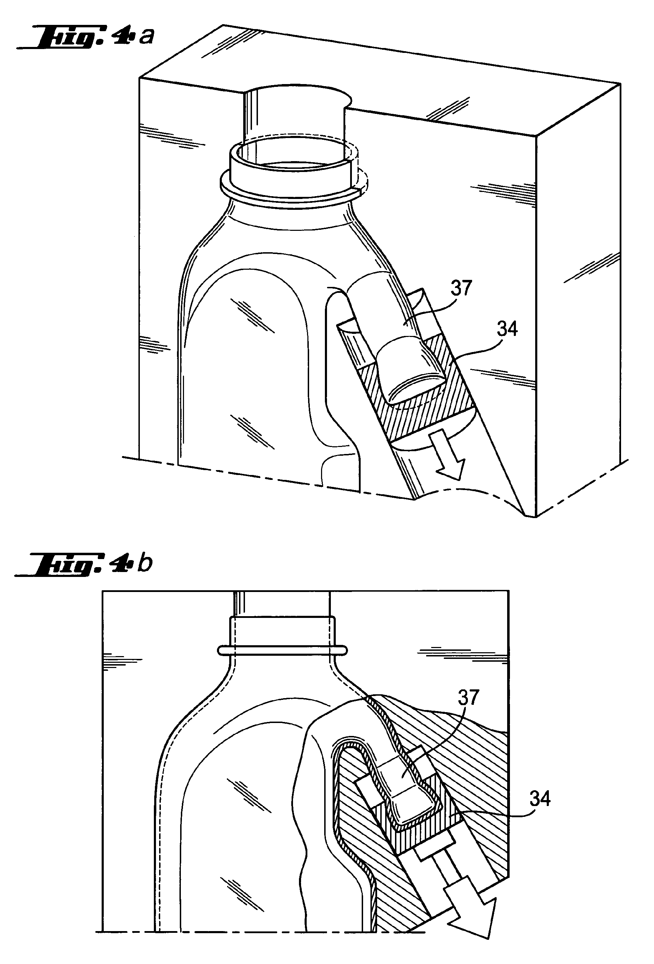

Figure 4 shows another embodiment of the present invention wherein the moving mold section 34 pulls the handle. The moving mold section 34 has an undercut to better grip the material for pulling into the minor cavity 37.

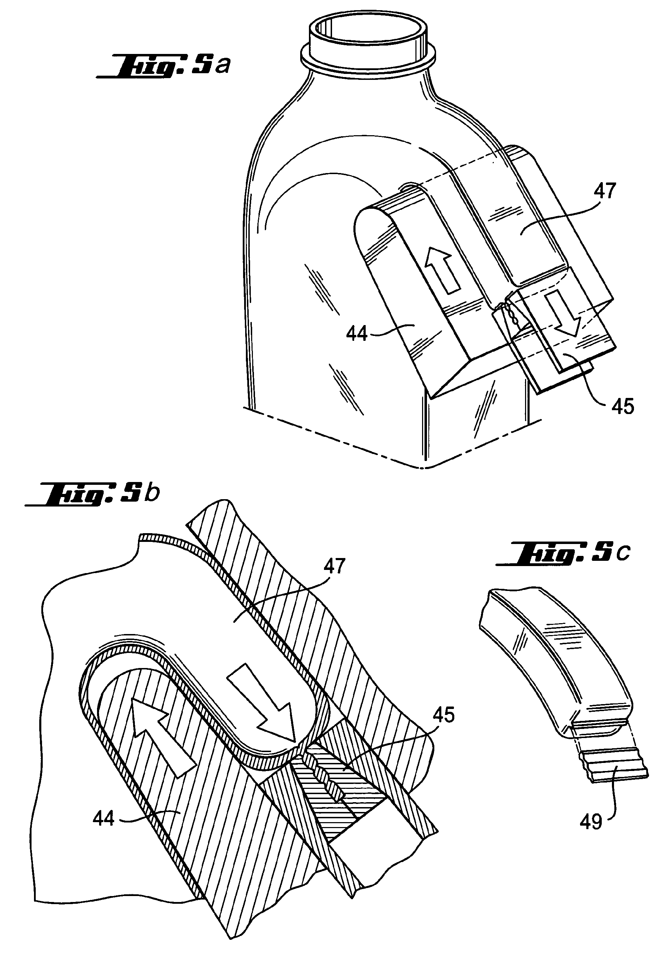

Figure 5 shows an alternative method of assisting the moving mold section 44 mentioned above by means of a "pulling" segment, wherein the pulling segment has a pinch grip to catch the edge 49 of the preform to efficiently pull it into the minor cavity 47.

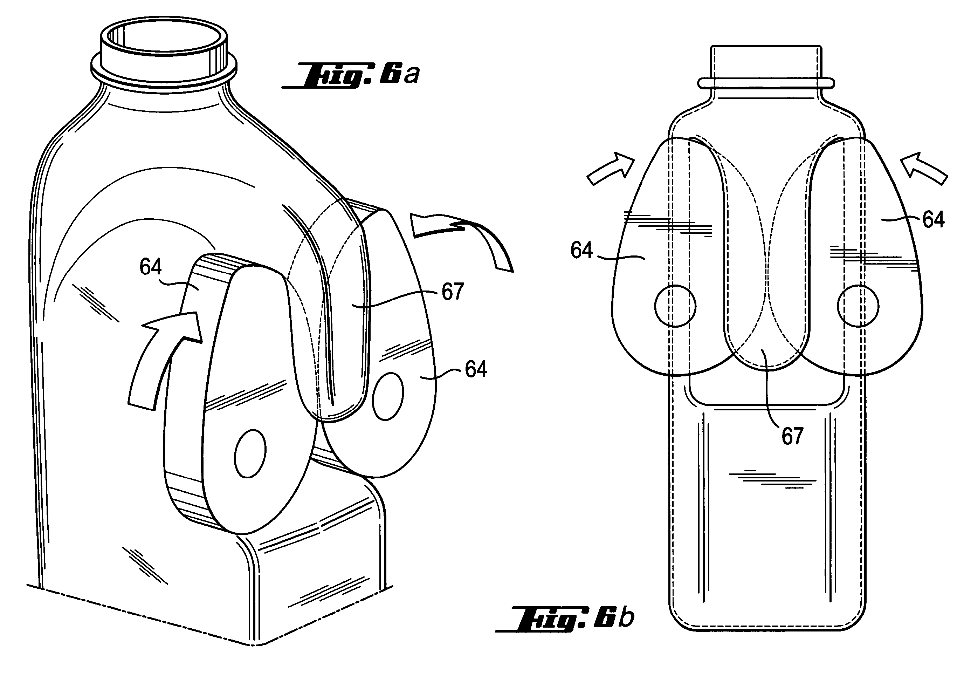

Figure 6 shows another embodiment of the present invention wherein a pair of cams 64 are rotated so as to form the minor cavity 67, and hence to form the handle.

Figure 7a shows a preform 102 which is an alternative to the preform of Figure 1a. In Figure 7a the material distribution of the preform 102 is asymmetric.

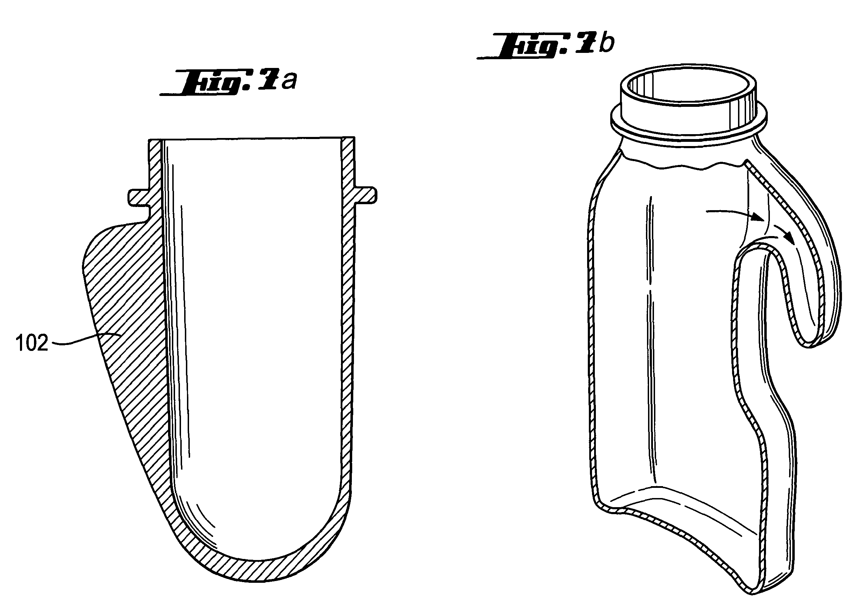

Figure 7b shows a cut-away section of a container formed from the preform of Figure 7a.The container comprises a handle disposed on a side of the bottle. This makes the container different from containers without handle and also from containers with clipped on handles, both of which are typical of containers produced by the SBM process. The handle is joined to the side of the container by a merging region. The handle according to the invention is, for example, forming a recess in the generally vertical direction when the bottle is standing upright upon its base, the recess being such that a user may slide the hand in the recess to hold, lift and pour from the container.

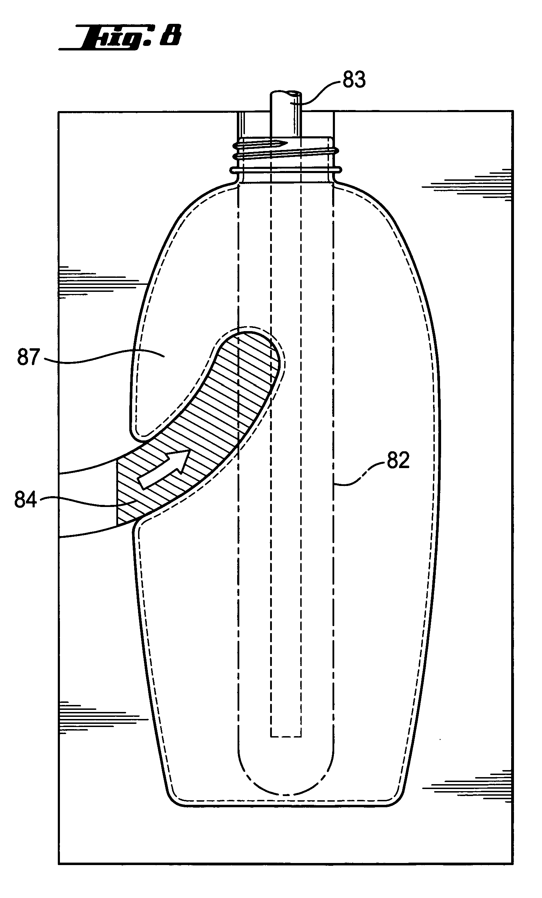

Figure 8 shows a moving mold section 84 contacting the side of the preform 82 after axial stretch by the stretch rod 83 but before pre-blow. The handle is formed by the minor cavity 87.

## Claims

1. A process for blow-molding a container, the container comprising a handle, whereby the process comprises the steps of:
(i) introducing a thermoplastic preform (2) into a mold cavity (6) and stretching the preform (2) with a stretch rod (3);
(ii) increasing the pressure within the preform (2) so that the preform (2) expands within the mold cavity (6);
(iii) displacing at least one moving mold section (4) within the mold and which deforms the thermoplastic material;
**characterized in that** the displacement of the moving section (4) is in a direction which is substantially parallel to the direction of movement of the stretch rod (3).

2. A process for blow-molding a container according to claim 2 wherein the displacement of the moving mold section (4) is in a direction which is substantially parallel to, and in the opposing sense, to the direction of movement of the stretch rod (3).

3. A process for blow-molding a container according to claim 1 wherein the moving parts within the mold cavity (6) consist of a single stretch rod (3) and another single moving mold section (4).

4. A process for blow-molding a container according to any of claims 1 to 3 wherein, in step (c), the moving mold section (4) is displaced within the mold such as to deform the expanding or expanded thermoplastic material.

5. A process for blow-molding a container according to any of claims 1 to 3 wherein, in step (c), the moving mold section (4) is displaced within the mold such as to deform the unexpanded preform.

6. A process for blow-molding a container according to any of claims 1 to 3 wherein the direction of movement of the stretch rod (3) is axial with respect to the container.
